# EUROPEAN PATENT SPECIFICATION

(11) **EP 1 985 257 B1**
(45) Date of publication and mention of the grant of the patent: **25.07.2012**
(21) Application number: 08007396.8
(22) Date of filing: 15.04.2008
(51) Int. Cl.: A61C 8/00

(54) **Container for dental implant**
Behälter für zahnärztliches Implantat
Récipient pour implant dentaire

(30) Priority: 23.04.2007 JP 2007112916
(43) Date of publication of application: 29.10.2008
(73) Proprietor: GC Corporation, Itabashi-ku Tokyo 174-8585 (JP)
(72) Inventor: Hanada, Shinichiro, Tokyo 174-8585 (JP); Takahashi, Masashi, Tokyo 174-8585 (JP); Suzuki, Yasuhiro, Tokyo 174-8585 (JP)
(74) Representative: Müller-Boré & Partner Patentanwälte

(56) References cited:
- WO-A-2005/013846
- US-A- 4 671 410
- US-A- 5 538 428
- US-A- 5 755 575
- US-A1- 2008 032 263

## Description

The present invention relates to a set of a container and a fixture capable of preventing to rotate a fixture in a container when an implanting instrument is engaged with the oral cavity inner side of the fixture, easily engaging them, and easily taking out the fixture.

When a fixture is taken out from a container for a fixture in a dental implant treatment, a fixture housed in a container for a fixture must be taken out with keeping a sterilized state. Therefore, since an operator cannot directly touch the fixture to take out, a container for a fixture is needed to have various contrivances and thus many containers for a fixture have been proposed.

For example, Japanese Translation of PCT Publication No. 2000-512195 discloses a container for a fixture in which a fixture is housed in a state that one end of a holding part (a fixture mount) ispreviously screwed into a hole screwed as a female part, which is bored along a center shaft of the fixture and has a top end closing toward the opposite side of an oral cavity inner side. The fixture housed in this state can be easily taken out by holding a portion of the fixture mount which is an opposed side to the side screwed with a screw part of the fixture by using a specific instrument and implanted into a jawbone in a state as it is. However, as illustrated in Fig. 8J in the above-described patent document, a fixture mount must be removed from a fixture implanted into a jawbone after an operation, and thus there is a problem that it takes much time and effort.

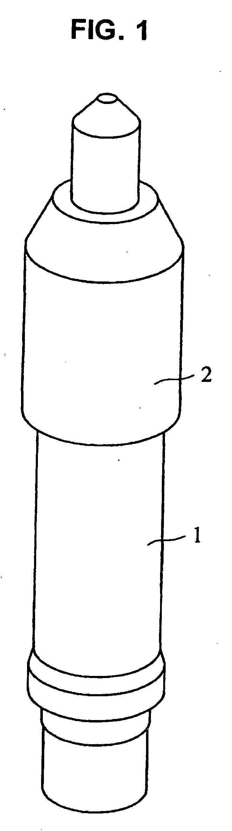

Further, Fig. 1b in Japanese Translation of PCT Publication No. 2004-510541 discloses a container (package) for a fixture capable of easily taking out a fixture without using a fixture mount, in which a holder holding an outer face of an end part of an oral cavity inner side of a fixture is taken out by sliding from the inside of a protection housing. In this container for a fixture, although the fixture can be easily taken out, a dental implant treatment cannot be carried out in a state that the holder holds a fixture. Thus, another instrument to take out a fixture from the holder is necessary. Therefore, there is a problem that it takes much time and effort to make a fixture to have a state capable of carrying out a dental implant treatment.

In order to solve the problem that it takes much time and effort after taking out a fixture from a container for a fixture, an implanting instrument detachable from a hole at the oral cavity inner side of a fixture is used. For example, Unexamined Japanese Patent Publication No. 2006-75427 discloses an implanting instrument, which has plural engaging projections at a top end thereof and is can be attached and detached to and from a fixture. The plural engaging projections are locked with plural concave grooves formed on an inner face at the oral cavity inner side of a hole which is screwed with a female screw part. The hole is bored along a center shaft of a fixture and has a top end closing toward the opposite oral cavity inner side. This implanting instrument can be easily taken out because of being just engaged with a fixture. Further, an operation after taking out the instrument from a container for a fixture does not take much time and effort. Further, an implanting operation into a jawbone can be rapidly carried out just after taking out the instrument from a container for a fixture.

However, although this implanting instrument can be easily taken out from a fixture, it takes much time when this instrument is engaged with a fixture.

Basically, a fixture is comparatively small because of being implanted into a jawbone and has a hole screwed with a female screw part. The hole is bored along a center shaft of a fixture and has a top end closing toward the opposite oral cavity inner side. Thus, when plural engaging projections of an implanting instrument are engaged with plural engaging concave grooves formed at a portion which has a larger diameter than a root diameter of a female screw part on the oral cavity inner side of the hole, the top end of the implanting instrument is pushed toward the oral cavity inner side of the hole bored at the fixture, and then the implanting instrument is rotated until the engaging projections of the implanting instrument are engaged with the concave grooves of the fixture so as to engage them. At this time, the fixture to which the top end of the implanting instrument is pushed may be simultaneously rotated, and thus it may often take time to engage an implanting instrument with the fixture.

Further, from WO 2005/013846 A1 a dental implant is known. The implant comprises a fixture having a cylindrical or conic shape so as to be inserted into the hole performed by the odontologist in the bone by means of special cutters and a stump projecting in the oral cavity. In order to personalize the implant, making it ever more similar to the natural teeth, the stump is thinned down in laboratory. A special case divides the implant into two parts by means of a separation membrane placed in the passage between the fixture and the stump. The membrane has the function of sealing the fixture during the operations of thinning down the stump. The part of the case covering the stump has the purpose of keeping its sterility and safety until the stump is used in the implant. Furthermore, the implant may remain stable inside the case due to the support of tabs welded to the case from the inside.

US 4,671,410 A discloses a package for sterile and contamination-free storage of artificial implants, comprising an inner capsule to hold said implant and being made of the same material as the implant, a hermetically sealed outer casing surrounding said capsule and a positioning member arranged inside said outer casing and in yielding abutment with the capsule.

The present invention solves the above-described problems, and an objective of the present invention is to provide a set of a container and a fixture capable of preventing to rotate a fixture in a container when an implanting instrument is engaged with the fixture, easily engaging them, and easily taking out the fixture.

Present inventors carried out earnest works to solve the above-described problems and, as a result of this, they found out the followings to complete the present invention. A set of a container and a fixture for a dental implant is made to have a main body to house a fixture in the inside thereof and a cap. One end of the main body has a fixture insert port and the other end closes. The cap is attached on the fixture insert port side of the main body. Further, the container for a fixture has a rotation-preventing projection part at an opposite side of the fixture insert port side of the main body. This rotation-preventing projection part is to prevent to rotate the fixture in the main body, where the fixture is housed while being engaged with a self tapping groove of a top end of a male screw part of the fixture. Then, when a top end of an implanting instrument is rotated while being pushed toward the fixture, the fixture is not simultaneously rotated. Thus, the implanting instrument can be easily engaged with the fixture. Further, the implanting instrument can be easily removed from the fixture because of having a structure in which the instrument is just engaged with the oral cavity inner side of the fixture. Thus, it does not take much time and effort to handle a fixture before and after an operation and a fixture can be very easily handled.

That is, the present invention is a set of a container and a fixture for a dental implant. The fixture has plural engaging concave grooves engaged with plural engaging projections formed at a top end part of an implanting instrument, and the plural engaging grooves are formed at a portion having a larger diameter than a root diameter of a female screw part which is on the oral cavity inner side of a hole. The hole is bored along a center shaft, has a closed top end toward an opposite oral cavity inner side and is screwed with the female screw part. The container for a fixture has a main body to house a fixture in the inside thereof and a cap. One end of the main body has a fixture insert port and the other end is closed. The cap is attached on the fixture insert port side of the main body. Further, the container for a fixture also has a rotation-preventing projection part at the opposite side to the fixture insert port side of the main body. This rotation-preventing projection part is to prevent rotation of a fixture in the main body and fixed to or integrated with the main body, where the fixture is housed while being engaged with a self tapping groove of a top end of a male screw part of the fixture.

Further, when the main body is made of titanium or a titanium alloy, the material of the main body is the same as the material of a fixture. Thus, different materials are not adhered to a fixture as impurities, and thus it is preferable.

A set of a container and a fixture according to the present invention is to house a fixture for a dental implant, and this fixture has plural engaging concave grooves engaged with plural engaging projections formed at a top end part of an implanting instrument, and the plural engaging grooves are formed at a portion having a larger diameter than a root diameter of a female screw part which is on the oral cavity inner side of a hole. The hole is bored along a center shaft and has a closed top end toward an opposite oral cavity inner side and is screwed with the female screw part. The container for a fixture has a main body to house a fixture in the inside thereof and a cap. One end of the main body has a fixture insert port, and the other end is closed. The cap is attached on the fixture insert port side of the main body. Further, the container for a fixture also has a rotation-preventing projection part at the opposite side to the fixture insert port side of the main body. This rotation-preventing projection part is to prevent rotation of a fixture in the main body and fixed to or integrated with the main body, where the fixture is housed while being engaged with a self tapping groove of a top end of a male screw part of the fixture. Therefore, when a top end of an implanting instrument is rotated while being pushed toward the fixture, the fixture is not simultaneously rotated. Therefore, the top end of the implanting instrument can be easily engaged with the fixture and the implanting instrument can be easily removed from the fixture. Thus, it does not take much time and effort to handle a fixture before and after an operation and a fixture can be very easily handled.

Further, when the main body is made of titanium or a titanium alloy, the material of the main body is the same as the material of a fixture. Thus, different materials are not adhered to a fixture as impurities.
Fig. 1 is a perspective view to illustrate one example of a container for a fixture according to the present invention.
Fig. 2 is a perspective view of a main body of a container for a fixture according to the present invention in Fig. 1.
Fig. 3 is a sectional view of an upper part of a main body of a container and a fixture according to the present invention.
Fig. 4 is a cross sectional view taken along A-A line in Fig. 2.
Fig. 5 is a partly sectioned perspective view section of a main body of a container for a fixture according to the present invention in Fig. 1.
Fig. 6 is a front view to illustrate one example of a fixture for a dental implant to be housed in a container for a fixture according to the present invention.
Fig. 7 is a longitudinal sectional view of a fixture for a dental implant in Fig. 6.
Fig. 8 is a plan view of a fixture for a dental implant in Fig. 6.
Fig. 9 is a front view to illustrate one example of an implanting instrument used when taking out a fixture for a dental implant housed in a container for a fixture according to the present invention.
Fig. 10 is a bottom view of an implanting instrument in Fig. 9.

A set of a container and a fixture according to the present invention will be described in detail below with referent to the drawings.

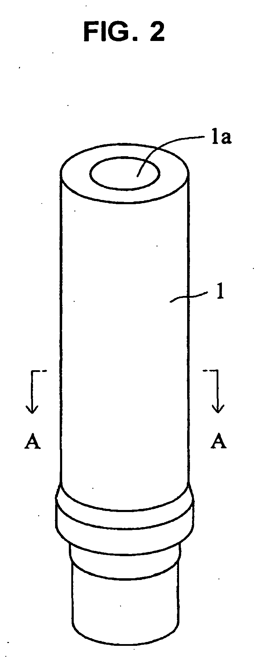

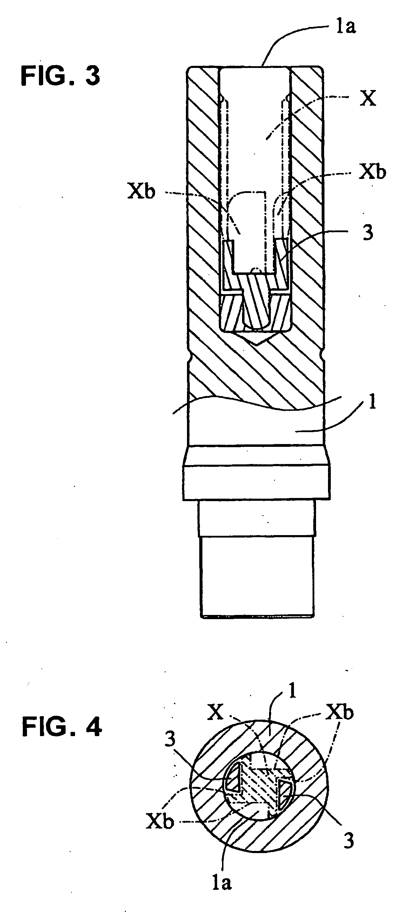

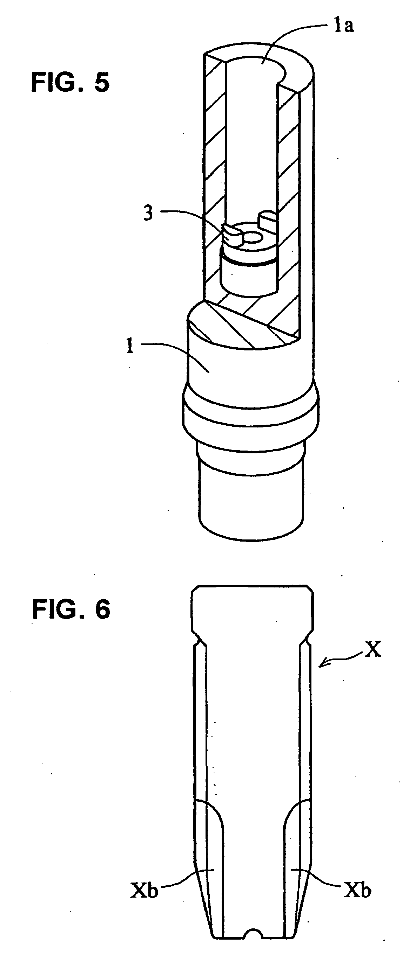

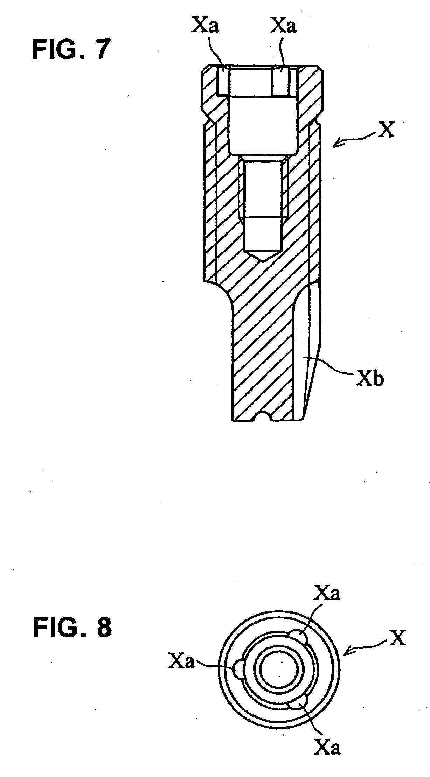

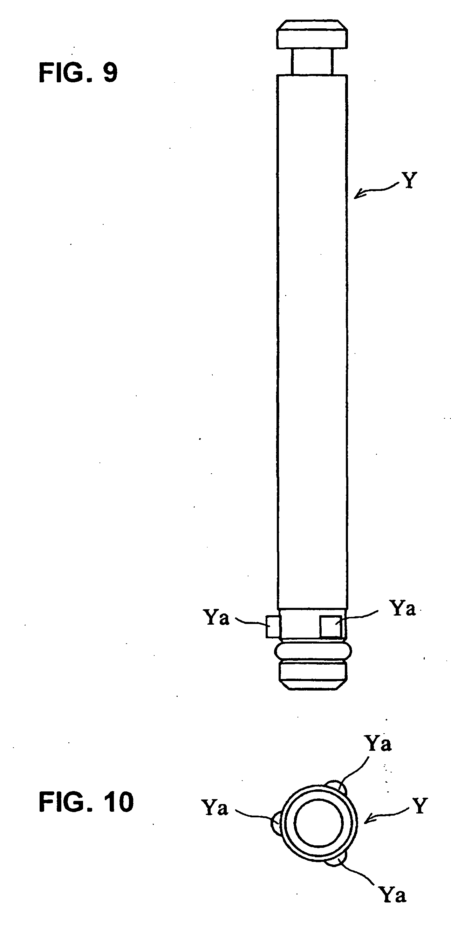

Fig. 1 is a perspective view to illustrate one example of a container for a fixture according to the present invention. Fig. 2 is a perspective view of a main body of a container for a fixture according to the present invention in Fig. 1. Fig. 3 is a sectional view of an upper part of a main body of a container and a fixture according to the present invention. Fig. 4 is a cross sectional view taken along A-A line in Fig. 2. Fig. 5 is a partly sectioned perspective view of a main body of a container for a fixture according to the present invention in Fig. 1. Fig. 6 is a front view to illustrate one example of a fixture for a dental implant to be housed in a container for a fixture according to the present invention. Fig. 7 is a longitudinal sectional view of a fixture for a dental implant in Fig. 6. Fig. 8 is a plan view of a fixture for a dental implant in Fig. 6. Fig. 9 is a front view to illustrate one example of an implanting instrument used when taking out a fixture for a dental implant housed in a container for a fixture according to the present invention. Fig. 10 is a bottom view of an implanting instrument in Fig. 9.

In the drawings, a main body 1 is to house a fixture X in the inside thereof. One end of the main body 1 has a fixture insert port la and the other end is closed. The present invention has the main body 1 and a cap 2 described below. Further, when the main body 1 is made of titanium or a titanium alloy, the material of the main body is the same as that of a fixture. Thus, different materials as impurities are not adhered to a fixture.

A cap 2 is attached on the fixture insert port la side, and this cap 2 is attached to keep the sterilized state in the main body 1. This cap 2 can be made of a resin because of being easily handled or made of titanium or a titanium alloy to have the same material as that of the fixture X. However, the material of this cap 2 is not especially limited. Further, the cap 2 can be made to be easily attached by only being covered on the main body 1 as illustrated in Fig. 1, or can be made to be attached by screwing into the main body 1 which is not illustrated.

A rotation-preventing projection part 3 is formed at the opposite side of the fixture insert port la in the main body 1, and is to prevent rotation of the fixture X in the main body 1, where the fixture is housed by being engaged with a self tapping groove Xb at a top end of a male screw part of the fixture X. The rotation-preventing projection part 3 is fixed to or integrated with the main body 1.

An implanting instrument Y has plural engaging projections Ya at a top end part thereof. A fixture X for a dental implant has plural engaging concave grooves Xa formed at a portion which has a larger diameter than a root diameter of a female screw part on the oral cavity inner side of a hole which is bored along a center shaft, has a closed top end toward the opposite oral cavity inner side, and is screwed with a female screw part. The plural engaging concave grooves Xa are engaged with the plural engaging projections Ya. The fixture X for a dental implant has a self tapping groove Xb at a top end of the male screw part.

In order to produce a container for a fixture according to the present invention, the rotation-preventing projection part 3 can be easily formed in the main body 1 by fitting and/or adhering fixedly a member, which is to form the rotation-preventing projection part 3, in the hole bored at the main body 1 to house the fixture X. Further, in order to prevent to break the fixture X when the member to form the rotation-preventing projection part 3 are fitted and/or adhered fixedly, the rotation-preventing projection part 3 may be provided in the main body 1 by making the member to be the rotation-preventing projection part 3 to have two parts, fitting and/or adhering fixedly a part to be a base in a hole bored at the main body 1 to house the fixture X, and fitting and/or adhering fixedly a part to be the rotation-preventing projection part 3 in a hole formed at the center of the base part. Further, the rotation-preventing projection part 3 is a portion which is engaged with the self tapping groove Xb at a top end of the male screw part of the fixture X. Thus, it is preferable that the rotation-preventing projection part 3 is made of the same material as that of the fixture X in order to prevent adhesion of different materials to the fixture X as impurities.

In addition, it is not necessary that the rotation-preventing projection part 3 is provided separately from the main body 1. The rotation-preventing projection part 3 can be integrally formed with the main body 1 by casting for example.

In the embodiment illustrated in Fig. 4, the fixture X has four self tapping grooves Xb, and two of them are engaged with the rotation-preventing projection part 3. Thus, it is not necessary that the number of the rotation-preventing projection part 3 is equal to the number of the self tapping groove Xb of the fixture X. If the sufficient effect to prevent rotation can be obtained, the number of the rotation-preventing projection part 3 can be at least one.

Further, when the shape of the rotation-preventing projection part 3 is approximately similar to the shape of a space formed between the self tapping groove Xb of the fixture X and the inner face of the main body 1 as illustrated in Fig. 4, the fixture X is certainly positioned and fixed in the main body 1, and thus rotation of the fixture X is certainly prevented and, in addition, when the container is carried, the fixture X is not damaged because of being not greatly moved in the main body 1, and thus it is preferable. Further, when the rotation-preventing projection part 3 has an external shape having a smoothly bending face, the fixture X is not damaged even when contacting to the rotation-preventing projection part 3, and thus it is more preferable.

Furthermore, in order to keep the sterilized state, many conventional containers for a fixture are doubly packaged. The container for a fixture according to the present invention can be also used with a container for externally packaging.

## Claims

1. A set of a container and a fixture (X) for a dental implant,
wherein the fixture (X) has plural engaging concave grooves (Xa) adapted to be engaged with plural engaging projections (Ya) formed at a top end part of an implanting instrument (Y), and the plural engaging grooves (Xa) are formed at a portion having a larger diameter than a root diameter of a female screw part on the oral cavity inner side of a hole which is bored along a center shaft, has a closed top end toward an opposite oral cavity inner side and is adapted to be screwed with the female screw part,
and wherein the container comprises:
a main body (1) to house the fixture (X) in the inside thereof, one end of the main body (1) having a fixture insert port (1a) and the other end being closed;
a cap (2) attached on the fixture insert port (1 a) side of the main body (1);
and
a rotation-preventing projection part (3) at the opposite side of the fixture insert port (1 a) side in the main body (1), the rotation-preventing projection part (3) being to prevent rotation of the fixture (X) in the main body (1) and fixed to or integrated with the main body (1), where the fixture (X) is housed, while rotation-preventing projection part (3) is engaged with a self tapping groove (Xb) of a top end of a male screw part of the fixture (X).

2. The container for a fixture as claimed in claim 1, wherein the main body (1) is made of titanium or a titanium alloy.

## Patentansprüche

1. Satz aus einem Behälter und einer Halterung bzw. Befestigung (X) für ein Dentalimplantat,
wobei die Halterung bzw. Befestigung (X) mehrere konkave Eingriffsnuten bzw. -rillen (Xa) aufweist, die angepasst sind, mit mehreren Eingriffsvorsprüngen (Ya) in Eingriff gebracht zu werden, die an einem oberen Endteil eines Implantierinstruments (Y) gebildet sind, und die mehreren Eingriffsnuten bzw. -rillen (Xa) an einem Abschnitt gebildet sind, der einen größeren Durchmesser aufweist als ein Kerndurchmesser eines aufnehmenden Schraubteils bzw.
Schraubteils mit Innengewinde auf der mundhöhleninneren Seite eines Lochs, der entlang eines Mittelschafts gebohrt ist, ein geschlossenes oberes Ende zu einer gegenüberliegenden bzw. entgegengesetzten mundhöhleninneren Seite aufweist und angepasst ist, mit dem aufnehmenden Schraubteil bzw. Schraubteil mit Innengewinde verschraubt zu werden,
und wobei der Behälter umfasst:
einen Hauptkörper (1) zum Häusen bzw. Unterbringen bzw. Aufnehmen der Halterung bzw. Befestigung (X) im Inneren davon, wobei ein Ende des Hauptkörpers (1) eine Halterungs- bzw. Befestigungseinsetzöffnung (1 a) aufweist und das andere Ende geschlossen ist;
eine Kappe (2), die auf der Seite der Halterungs- bzw. Befestigungseinsetzöffnung (1 a) des Hauptkörpers (1) angebracht ist; und
einen eine Rotation verhindernden Vorsprungsteil (3) an der gegenüberliegenden bzw. entgegengesetzten Seite der bzw. zu der Seite der Halterungs- bzw. Befestigungseinsetzöffnung (1 a) in dem Hauptkörper (1), wobei der eine Rotation verhindernde Vorsprungsteil (3) zum Verhindern einer Rotation der Halterung bzw. Befestigung (X) in dem Hauptkörper (1) dient und an dem Hauptkörper (1) fixiert bzw. befestigt ist oder mit diesem integriert ist, wo die Halterung bzw. Befestigung (X) gehäust bzw. untergebracht bzw. aufgenommen ist, während der eine Rotation verhindernde Vorsprungsteil (3) mit einer selbstschneidenden Nut bzw. Rille (Xb) eines oberen Endes eines aufzunehmenden Schraubteils bzw. Schraubteils mit Außengewinde der Halterung bzw. Befestigung (X) in Eingriff ist.

2. Behälter für eine Halterung nach Anspruch 1, wobei der Hauptkörper (1) aus Titan oder einer Titanlegierung besteht.

## Revendications

1. Un ensemble comprenant un récipient et un accessoire (X) pour un implant dentaire,
dans lequel l'accessoire (X) a une pluralité de rainures d'accouplement concaves (Xa) adaptées pour coopérer avec une pluralité de protubérances d'accouplement (Ya) formées sur une partie d'extrémité supérieure d'un instrument d'implantation (Y), et la pluralité de rainures d'accouplement (Xa) sont formées dans une portion ayant un diamètre plus grand que le diamètre intérieur d'une partie vis femelle du côté intérieur de la cavité buccale d'un trou percé le long d'un axe central, a une extrémité supérieure fermée vers un côté intérieur opposé de cavité buccale et est adapté pour être vissé dans la partie vis femelle,
et dans lequel le récipient comprend :
un corps principal (1) destiné à loger l'accessoire (X) à l'intérieur de celui-ci, une extrémité du corps principal (1) ayant un logement d'insertion d'accessoire (1a) et l'autre extrémité étant fermée ;
un capuchon (2) attaché du côté logement d'insertion de l'accessoire (1a) du corps principal (1) ; et
une partie protubérante empêchant la rotation (3) du côté opposé au côté logement d'insertion de l'accessoire (1a) dans le corps principal (1), la partie protubérante empêchant la rotation (3) étant destinée à empêcher la rotation de l'accessoire (X) dans le corps principal (1) et étant fixée ou intégrée au corps principal (1), où l'accessoire (X) est logé, tandis que la partie protubérante empêchant la rotation (3) coopère avec une rainure autotaraudeuse (Xb) d'une extrémité supérieure d'une partie vis mâle de l'accessoire (X)

2. Le récipient pour un accessoire tel que revendiqué à la revendication 1, dans lequel le corps principal (1) est en titane ou en alliage de titane.
